# EUROPÄISCHE PATENTSCHRIFT

(11) **EP 0 649 992 B1**
(45) Veröffentlichungstag und Bekanntmachung des Hinweises auf die Patenterteilung: **30.07.1997**
(21) Anmeldenummer: 94113426.4
(22) Anmeldetag: 27.08.1994
(51) Int. Cl.: F16D 65/095

(54) **Betätigungseinrichtung für eine Scheibenbremse**
Disc brake actuator
Moteur de frein à disque

(30) Priorität: 17.03.1994 DE 4409159; 23.10.1993 DE 4336275
(43) Veröffentlichungstag der Anmeldung: 26.04.1995
(73) Patentinhaber: WABCO GmbH, 30453 Hannover (DE)
(72) Erfinder: Reinecke, Erich, D-31303 Burgdorf (DE)
(74) Vertreter: Schrödter, Manfred, Dipl.-Ing.

(56) Entgegenhaltungen:
- WO-A-92/10692
- DE-A- 2 054 593
- DE-A- 3 333 670
- DE-B- 1 193 320
- GB-A- 959 183
- GB-A- 2 087 996

## Beschreibung

Die Erfindung betrifft Betätigungseinrichtungen für eine Scheibenbremse nach den Oberbegriffen der Patentansprüche 1 und 12.

Beim Betätigen einer Scheibenbremse wird durch eine Zuspannbewegung eines Bremsbelags auf eine Bremsscheibe zu und eine gleichgerichtete Zuspannkraft auf den Bremsbelag eine Bremskraft in Umfangsrichtung der Bremsscheibe erzeugt. Der Bremsbelag ist üblicherweise auf einem Bremsbelagträger angeordnet, der mit dem Bremsbelag einen Bremsklotz bildet und über den die Zuspannkraft auf den Bremsbelag übertragen wird. Die der erzeugten Bremskraft gleiche, aber entgegengerichtete, Reaktionskraft wird von einer Abstützung des Bremsträgers erzeugt und über die Stirnfläche des Bremsbelagträgers auf diesen und damit auf den Bremsbelag übertragen.

Beim Betätigen einer Scheibenbremse können Bewegungen des Bremsbelagträgers und des Bremsklotzes in Zuspannrichtung und in Gegenrichtung auftreten. Solche Bewegungen des Bremsbelagträgers können auf einer Erhöhung der Zuspannkraft und der entsprechenden Kompression des Bremsbelags beruhen, während solche Bewegungen des Bremsklotzes auf Ungleichmäßigkeiten im Lauf der Bremsscheibe, beispielsweise infolge Axialschlags oder ungleichmäßiger Dicke derselben, beruhen. Ohne Gegenmaßnahmen können solche Bewegungen zu Freßerscheinungen an der Stirnfläche des Bremsbelagträgers und an der Abstützung des Bremsträgers führen, weil diese während des Eingriffs unter im allgemeinen erheblicher Flächenpressung ohne Schmierung bzw. bei schlechter Schmierung stehen. Nachteilige Folgen solcher Freßerscheinungen können Verschleiß und eine Hysterese sein, infolge deren sowohl ein Teil eines etwaigen Zuwachses der Zuspannkraft absorbiert als auch eine Lösebewegung durch Reibkraft erschwert wird.

Aus der DE-29 01 904 A1 ist eine Betätigungseinrichtung für eine Scheibenbremse bekannt, die als Gegenmaßnahme ein Zwischenglied aus einem reibungsarmen Werkstoff zwischen der Stützfläche des Bremsträgers und der Stirnfläche des Bremsbelagträgers enthält, wobei die Reibungsarmut des Zwischengliedes auf seiner dem Bremsbelagträger zugewandten Seite beispielsweise durch eine PTFE-Schicht bewirkt wird. Da einige reibungsarme Werkstoffe eine weiche oder wenigstens relativ weiche Oberfläche aufweisen, ist damit zu rechnen, daß sie sich relativ schnell abnutzen und folglich nicht zu einer dauerhaften Verbesserung des Betriebsverhaltens dieser Betätigungseinrichtung führen können.

Betätigungseinrichtungen der eingangs genannten Arten, die Gegenmaßnahmen zur Vermeidung der oben erwähnten Freßerscheinungen enthalten, sind aus der GB-A-959 183 sowie den DE-B-1 193 320 und GB-A-2 087 996 bekannt. Die GB-A-959 183 sieht als Gegenmaßnahme die Anordnung eines Wälzkörpers zwischen Bremsbelagträger und Abstützung vor, der sich bei Bewegungen des Bremsbelagträgers in Zuspannrichtung und in Gegenrichtung abwälzt. Die DE-B-1 193 320 sieht als Gegenmaßnahme die Anordnung elastischer Mittel in Gestalt von federnden Stiften zwischen Bremsbelagträger und Abstützung vor, welche Bewegungen des Bremsbelagträgers in Zuspannrichtung und in Gegenrichtung elastisch aufnehmen. Auch die GB-A-2 087 996 sieht als Gegenmaßnahme die Anordnung elastischer Mittel zwischen Bremsbelagträger und Abstützung vor, und zwar in Gestalt eines Elastomerelements.

Die bekannten Betätigungseinrichtungen sehen einen Ausgleich des Belagverschleißes nicht vor. Ist ein solcher Ausgleich erforderlich, bedürfen die bekannten Betätigungseinrichtungen dazu zusätzlicher Einrichtungen.

Der Erfindung liegt die Aufgabe zugrunde, Betätigungseinrichtungen der eingangs genannten Arten mit einfachen Mitteln so fortzubilden, daß sie auch einen Ausgleich des Belagverschleißes gewährleisten.

Diese Aufgabe wird durch die in den Patentansprüchen 1 und 12 angegebene Erfindung gelöst. Vorteilhafte Ausgestaltungen und Weiterbildungen sind in den Unteransprüchen angegeben.

In der nunmehr folgenden Erläuterung der Erfindung anhand zeichnerisch dargestellter Ausführungsbeispiele werden weitere Vorteile der Erfindung genannt.

Unter durchgehender Verwendung gleicher Bezugszeichen für funktionsgleiche Bauteile zeigen
- Fig. 1: eine Draufsicht einer Scheibenbremse,
- Fig. 2: eine Ansicht der Scheibenbremse gemäß Fig. 1,
- Fig. 2A: eine Abwandlung von Fig. 2,
- Fig. 3: Details und Fortbildungen der Ausführungsbeispiele nach den Fig. 1 und 2.
- Fig. 4: dto.
- Fig. 5: dto.
- Fig. 6: dto.
- Fig. 7: dto.
- Fig. 8: ausschnittsweise eine andere
- Fig. 9: Scheibenbremse
- Fig. 10: eine andere Abwandlung der Scheibenbremse nach den Fig. 8 und 9,
- Fig. 11: dto.
- Fig. 12: ausschnittsweise andere
- Fig. 13: Scheibenbremsen.
- Fig. 14: in Fortbildung der Abwandlung nach Fig. 11,
- Fig. 15: eine andere Fortbildung der Abwandlung nach Fig. 11,

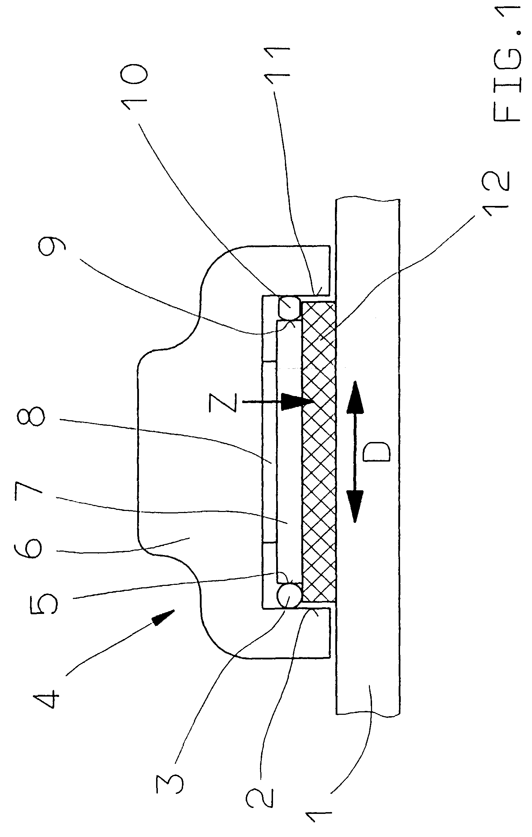

Die in Fig. 1 in Draufsicht dargestellte Scheibenbremse besteht aus einer in bekannter Weise drehbar und quer zu ihrer Drehbeweglichkeit, d.h. in ihrer Axialrichtung, fest gelagerten Bremsscheibe (1) sowie einer generell mit (4) bezeichneten Betätigungseinrichtung. Die möglichen Drehrichtungen der Bremsscheibe (1) sind durch einen Doppelpfeil D gekennzeichnet.

Die Betätigungseinrichtung (4) ist einseitig zu der Bremsscheibe (1) gezeichnet und stellt eine mögliche Grundausführung dar. In der Regel wird jedoch die Betätigungseinrichtung in einer solchen Grundausführung nicht eingesetzt. Vielmehr erstreckt sich üblicherweise die Betätigungseinrichtung auf beide Seiten der Bremsscheibe, wobei ein Bremsträger die Bremsscheibe übergreift und die Betätigungseinrichtung die weiteren nachstehend näher beschriebenen Bestandteile beiderseits der Bremsscheibe aufweist.

Die dargestellte Betätigungseinrichtung (4) weist einen Bremsträger (6) auf, der relativ zu dem die axiale Fixierung der Bremsscheibe (1) bewirkenden Bauteil unbeweglich befestigt ist. In dem Bremsträger (6) sind als weitere Bestandteile der Betätigungseinrichtung (4) eine durch einen Zuspannkolben (8) angedeutete Zuspanneinrichtung, ein Bremsbelag (12) und ein Bremsbelagträger (7) angeordnet. Der Bremsbelag (12) besteht aus einem Reibwerkstoff, der Bremsbelagträger (7) besteht in der Regel aus einem metallischen Werkstoff. Der Bremsbelagträger (7) und der Bremsbelag (12) sind miteinander verbunden und bilden einen Bremsklotz (7, 12).

In dem Bremsträger (6) sind, aus der Sicht der Bremsscheibe (1), beiderseits des Bremsklotzes (7, 12) Abstützungen (2, 11) in Form von Anschlägen ausgebildet, die etwa in Radialrichtung der Bremsscheibe (1) verlaufen. Diesen Abstützungen (2, 11) des Bremsträgers (6) stehen mit Abstand parallel zu den Stützflächen (2 bzw. 11) verlaufende Stirnflächen (5, 9) des Bremsbelagträgers (7) gegenüber. In dem Zwischenraum zwischen jeweils einer Abstützung (2 bzw. 11) des Bremsträgers (6) und der jeweils gegenüberstehenden Stirnfläche (5 bzw. 9) des Bremsbelagträgers (7) ist jeweils ein Wälzkörper (3 bzw. 10) angeordnet. Die Wälzkörper (3 und 10) sind unterschiedlich ausgebildet und illustrieren dadurch ganz allgemein, daß der Wälzkörper auf jede geeignete Art ausführbar ist. Während der in der Zeichnung links dargestellte Wälzkörper (3) als Rolle ausgebildet ist, besteht der in der Zeichnung rechts dargestellte Wälzkörper (10) aus einem Rechteckstück, dessen sich am Bremsbelagträger (7) und an der zugeordneten Abstützung (11) des Bremsträgers (6) abstützende Flächen ballig ausgebildet sind.

Die Scheibenbremse wird in bekannter Weise durch eine Zuspannbewegung des Bremsklotzes (7, 12) und eine Zuspannkraft auf den Bremsklotz (7, 12) in einer durch einen Pfeil Z angedeuteten Zuspannrichtung betätigt. Die Zuspannbewegung und die Zuspannkraft werden in bekannter Weise durch die Zuspanneinrichtung erzeugt.

Die infolge der Zuspannkraft in der Berührungsfläche von Bremsscheibe (1) und Bremsbelag (12) entstehende Bremskraft hat das Bestreben, den Bremsklotz (7, 12) in der gerade vorhandenen Drehrichtung der Bremsscheibe (1) mitzunehmen. Die Mitnahme wird jedoch dadurch verhindert, daß sich die der vorhandenen Drehrichtung zugeordnete Stirnfläche (5 bzw. 9) des Bremsbelagträgers (7) über den zugeordneten Wälzkörper (3 bzw. 10) an die gegenüberstehende Abstützung (2 bzw. 11) des Bremsträgers (6) anlegt und daran abstützt. Der jeweilige Wälzkörper (3 bzw. 10) wird dabei zwischen der jeweiligen Stirnfläche (5 bzw. 9) des Bremsbelagträgers (7) und der jeweiligen Abstützung (2 bzw. 11) des Bremsträgers (6) eingeklemmt.

Treten nun während einer Bremsbetätigung, beispielsweise aus den in der Beschreibungseinleitung erwähnten Gründen, Bewegungen des Bremsklotzes (7, 12) oder des Bremsbelagträgers (7) in Zuspannrichtung (Z) oder in Gegenrichtung auf, so wird der eingeklemmte Wälzkörper (3 bzw. 10) in Richtung dieser Bewegungen mitgenommen. Dabei machen der als Rolle ausgebildete Wälzkörper (3) eine Rollbewegung bzw. der aus dem Rechteckstück mit balligen Flächen bestehende Wälzkörper eine Kippbewegung. Dabei tritt in den Berührungslinien bzw. Berührungsflächen zwischen der jeweiligen Abstützung (2 bzw. 11) des Bremsträgers (6), der jeweiligen Stirnfläche (5 bzw. 9) des Bremsbelagträgers (7) und des jeweiligen Wälzkörpers (3 bzw. 10) nur Rollreibung auf. Dadurch sind die den Bewegungen des Bremsklotzes (7, 12) bzw. des Bremsbelagträgers (7) in Zuspannrichtung (Z) bzw. in Gegenrichtung entgegenwirkenden Reibkräfte sehr gering, mit der Folge, daß Freßerscheinungen an den beteiligten Flächen vermieden werden und die Hysterese gering gehalten wird. Hat der aus dem Rechteckstück bestehende Wälzkörper (10) bei seiner Kippbewegung Platzbedarf quer zu der Zuspannrichtung (Z), so muß für ihn ein entsprechendes Einbauspiel vorgesehen sein.

Abweichend von der Darstellung muß nicht, aus der Sicht der Bremsscheibe (1), auf jeder Seite des Bremsbelagträgers (7) ein Wälzkörper angeordnet sein. Es wäre auch möglich, nur einen Wälzkörper vorzusehen, beispielsweise zwischen der am stärksten bzw. am häufigsten belasteten Abstützung und der zugeordneten Stirnfläche des Bremsträgers (6) bzw. des Bremsbelagträgers (7). Diese werden in der Regel diejenigen sein, die der Drehrichtung der Bremsscheibe bei Vorwärtsfahrt des gebremsten Fahrzeugs zugeordnet sind.

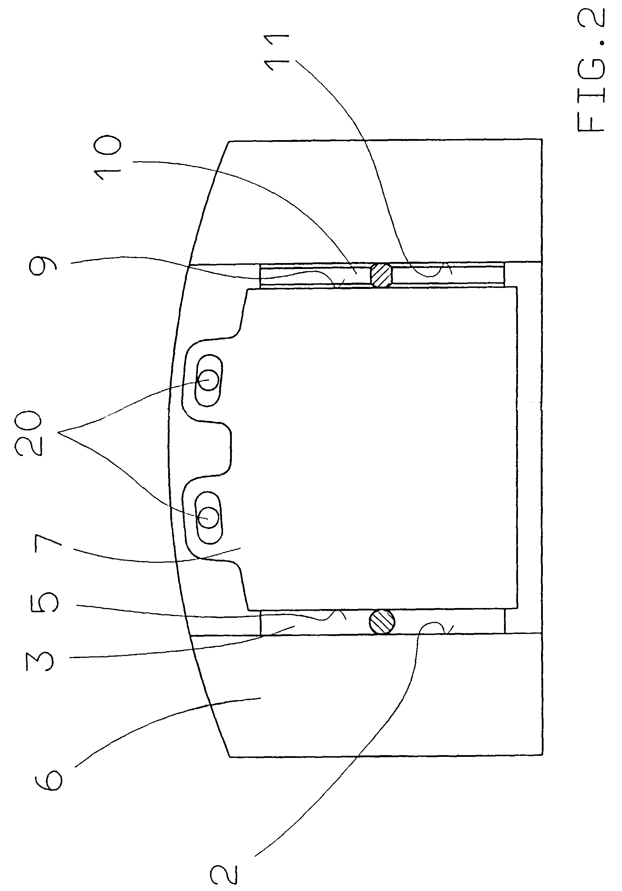

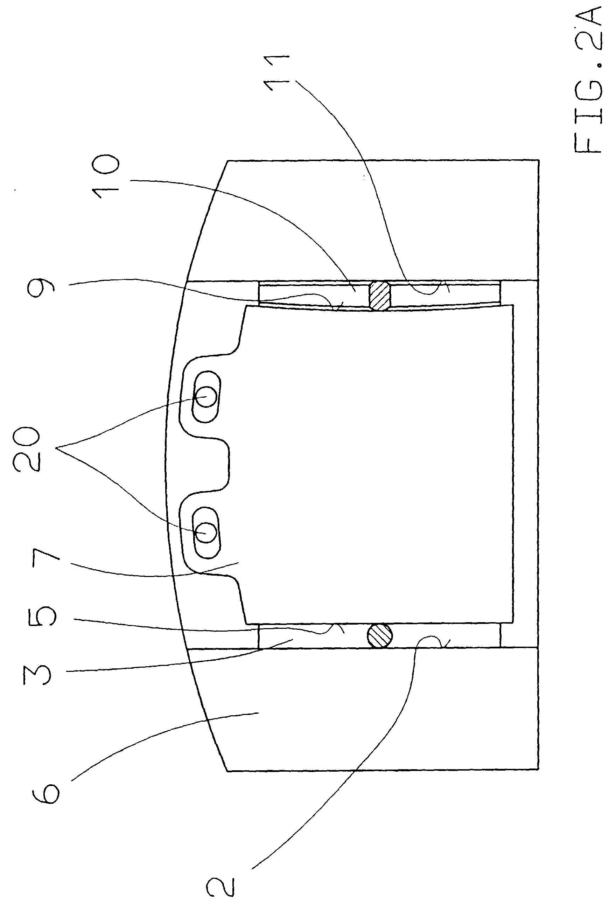

Fig. 2 zeigt eine Ansicht der Betätigungseinrichtung aus Sicht der Bremsscheibe (1) bei entferntem Bremsbelag. Die Darstellung verdeutlicht insbesondere die Lage der Wälzkörper (3 bzw. 10) sowie der Abstützungen (2 bzw. 11) des Bremsträgers (6) und der Stirnflächen (5 bzw. 9) des Bremsbelagträgers (7).

Mit (20) sind in Fig. 1 nicht wiedergegebene Haltestifte angedeutet, die einerseits im Bremsträger (6) gehaltert sind und andererseits in Langlöcher des Bremsbelagträgers (7) eingreifen und der Fixierung des Bremsklotzes (7, 12) in Radialrichtung der Bremsscheibe (1) dienen.

Auf nicht dargestellte Weise können anstelle der abgebildeten Wälzkörper (3 bzw. 10), die in Radialrichtung der Bremsscheibe relativ lang sind, auch mehrere kürzere Wälzkörper eingesetzt werden. Auch Kugeln, unter Umständen in einem Führungskäfig, sind als Wälzkörper denkbar.

In Fig. 2A sind die Stirnfläche (9) des Bremsbelagträgers (7) und die derselben zugewandte Fläche des Wälzkörpers (10), aus der Sicht des Bremsbelagträgers (7), kreisförmig konkav gekrümmt, wodurch die Berührungslinie zwischen dem Bremsbelagträger (7) und dem Wälzkörper (10) aus der Sicht des Bremsbelagträgers (7) ein konkaver Kreisbogen ist. Diese Ausbildung ermöglicht den Ausgleich von Parallelitätsabweichungen zwischen der Stirnfläche (9) des Bremsbelagträgers (7) und der Abstützung (11) des Bremsträgers (6). Der genannte Ausgleich erfolgt durch selbsttätiges Verschieben des Wälzkörpers (10) in seiner Längsrichtung beim Aufbau einer Bremskraft und damit einer Flächenpressung zwischen dem Bremsbelagträger (7) und dem Wälzkörper (10). In vorteilhafter Weise kann der Krümmungsradius der Stirnfläche (9) des Bremsbelagträgers (7) etwas kleiner oder etwas größer ausgebildet sein als der Krümmungsradius der zugeordneten Fläche des Wälzkörpers (10).

Dem Fachmann ist klar, daß die Zwischenglieder in der Zuspannrichtung (Z) und in der Gegenrichtung sowie in Radialrichtung der Bremsscheibe gegen Herausfallen gesichert sein müssen. Dies kann auf jede zweckmäßige Weise geschehen. Die folgenden Figuren zeigen Fortbildungen der Erfindung mit dieser Zielsetzung. Dabei gelten die für den rollenförmigen Walzkörper (3) getätigten Aussagen für den aus einem Rechteckstück bestehenden Wälzkörper (10) entsprechend mit, wobei anstelle der Rollbewegung dessen Kippbewegung tritt.

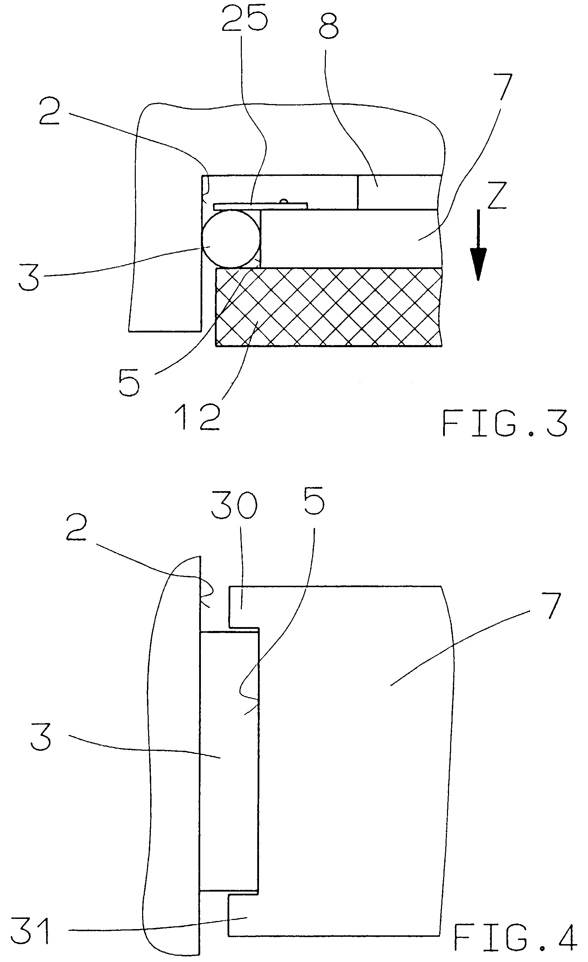

Gemäß der vergrößerten Draufsicht nach Fig. 3 ist der Bremsbelagträger (7) mit einem federnden Anschlag (25) versehen, der ein Herausfallen des Wälzkörpers (3) aus seinem Einbauraum zwischen der Abstützung (2) des Bremsträgers (6) und der Stirnfläche (5) des Bremsbelagträgers (7) entgegen der Zuspannrichtung (Z) verhindert.

Darüber hinaus bietet der federnde Anschlag (25) folgende Vorteile. Bei der Zuspannbewegung vor dem Aufbau einer Bremskraft nimmt der Anschlag (25) den losen Wälzkörper (3) mit, wobei dieser sich frei bewegt oder entlang der Abstützung (2) gleitet. Tritt nach dem Aufbau einer Bremskraft eine weitere Bewegung des Bremsbelagträgers (7) in Zuspannrichtung (Z) bzw. in Gegenrichtung auf, so macht der Wälzkörper (3) die oben erwähnte Rollbewegung, wobei er den Anschlag (25) entgegen der Zuspannrichtung (Z) biegt. Bei Aufhebung der Zuspannkraft, d. h. beim Bremslösen, übt der Anschlag (25) eine Rückstellkraft auf den Bremsklotz (7, 12) aus und zieht diesen um das Maß zurück, welches dem vorangegangenen Rollweg des Wälzkörpers (3) entspricht. Dabei rollt der Wälzkörper (3) um diesen Rollweg zurück. Von Bremsbetätigung zu Bremsbetätigung bewegt sich der Wälzkörper (3) vor dem Aufbau einer Bremskraft relativ zu dem Bremsträger (6) frei oder gleitend in das Maß des jeweils eingetretenen Verschleißes des Bremsbelages (12), d. h., es erfolgt ein automatischer Verschleißausgleich. Der Anschlag (25) und der Wälzkörper (3) wirken deshalb zusammen auch als Einstelleinrichtung bzw. Begrenzungseinrichtung des Zuspannweges und als Belagverschleiß-Ausgleichseinrichtung.

Der Anschlag (25) kann auf jede geeignete Art an dem Bremsbelagträger (7) angebracht sein. Dargestellt ist er angenietet.

Die Funktion des federnden Anschlags kann aber auch von einem oder mehreren Elastomerelement(en) übernommen werden, welches bzw. welche einerseits an dem Wälzkörper (3 bzw. 10) und andererseits an dem Bremsbelagträger (7) befestigt ist bzw. sind, und auch zwischen dem Wälzkörper (3 bzw. 10) und Bremsbelagträgers (7) angeordnet sein können.

Abstrahiert lassen sich alle vorstehend beschriebenen federnden Bauteile als Stellmittel bezeichnen, die den Wälzkörper (3 bzw. 10) bei gelöster Bremse in einer vorgegebenen Ausgangsposition halten und bei Zuspannung des Bremsbelagträgers (7) eine Abwälzbewegung des Wälzkörpers (3 bzw. 10) zulassen.

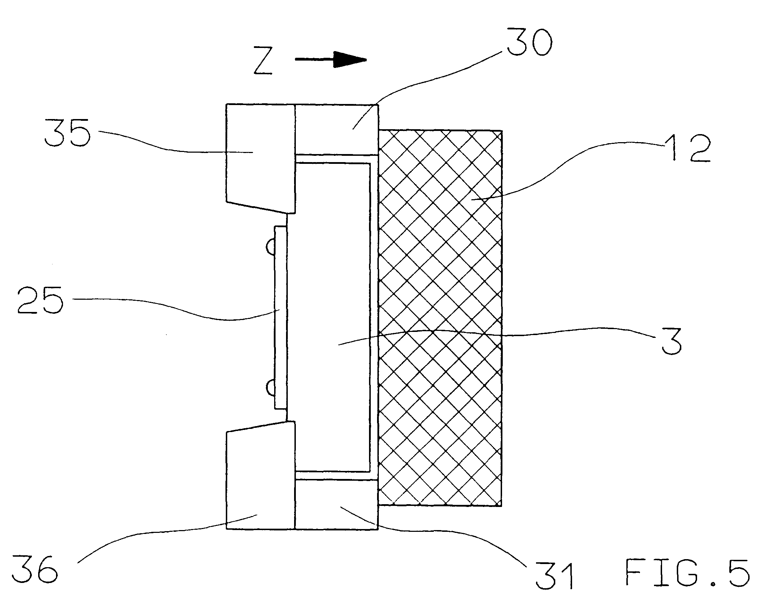

Fig. 4 zeigt ausschnittsweise eine Ansicht der Betätigungseinrichtung aus Sicht der Bremsscheibe (1). In dieser Fortbildung umgreift der Bremsbelagträger (7) den Wälzkörper (3), aus Sicht der Bremsscheibe radial außen und radial innen mit Fortsätzen, die in Radialrichtung der Bremsscheibe (1) Anschläge (30, 31) für den Wälzkörper (3) bilden und diesen am Heraustreten aus seinem Einbauraum in Radialrichtung der Bremsscheibe (1) hindern. Je nach Bedingungen des Einsatzfalles sind nicht immer beide Anschläge (30 und 31) erforderlich. Vielmehr kann auch einer dieser Anschläge (30 oder 31) ausreichend sein.

Fig. 5 zeigt in einer Ansicht aus Sicht der Abstützung (2) des Bremsträgers (6) eine Kombination der Fortbildungen nach den Figuren 3 und 4. Der Wälzkörper (3) ist in diesem Fall im Bereich seiner Enden abgekröpft. Im eingebauten Zustand des Wälzkörpers (3) liegen die Kröpfungen auf der dem Bremsbelag (12) abgewandten Seite des Bremsbelagträgers (7). Dabei wird der Wälzkörper (3) von dem federnden Anschlag (25) so in Zuspannrichtung (Z) vorgespannt, daß die Kröpfungen sich an die ihnen zugewandte Seite des Bremsbelagträgers (7) anlegen. Die Kröpfungen bilden dadurch Anschläge (35, 36), welche die Beweglichkeit der Wälzkörper (3) relativ zu dem Bremsbelagträger (7) in Zuspannrichtung (Z) begrenzen.

Diese Fortbildung ermöglicht die Vereinigung des Bremsklotzes (7, 12) mit dem federnden Anschlag (25) und des Wälzkörpers (3) zu einer Untergruppe, die sich als Verpackungseinheit oder Montagegruppe vom Hersteller ausliefern läßt und eine Vereinfachung der Montage und der Überholung der Scheibenbremse bietet. Eine solche Untergruppe entsteht auch, wenn der Wälzkörper (3 bzw. 10) und der Bremsbelagträger (7) durch ein oder mehrere Elastomerelemente verbunden werden.

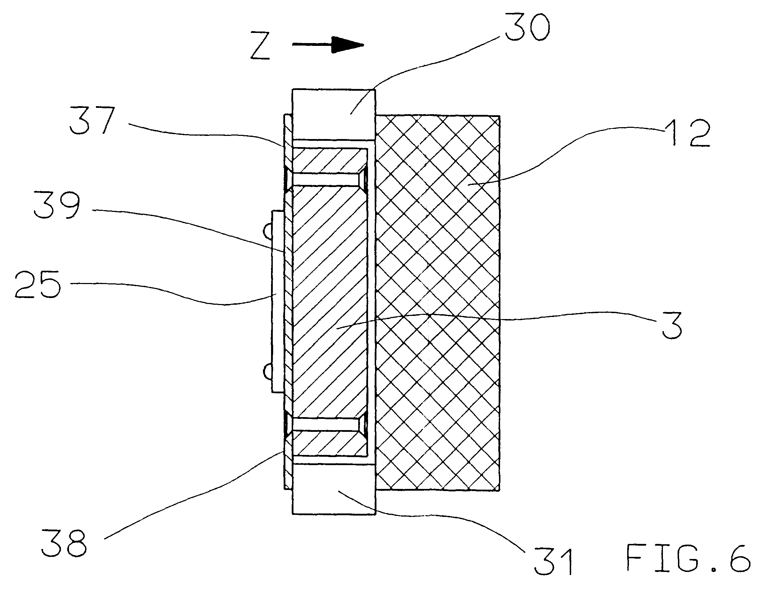

In Fig. 6 ist der Wälzkörper (3) mit einer Blattfeder (39) zusammengebaut (beispielsweise durch Nieten), wobei die Enden der Blattfeder (39) den Wälzkörper (3) überragen. In dieser Fortbildung übernehmen die Enden (37, 38) der Blattfeder (39) die Aufgabe der Kröpfungen (35, 36) der Fortbildung nach Fig. 5. Dadurch wird die Beweglichkeit des Wälzkörpers (3) relativ zu dem Bremsbelagträger (7) in Zuspannrichtung (Z) elastisch begrenzt. Diese elastische Begrenzung erleichtert das Abrollen des Wälzkörpers (3), wenn der Bremsbelagträger sich nach dem Aufbau einer Bremskraft in Zuspannrichtung (Z) und/oder in Gegenrichtung bewegt.

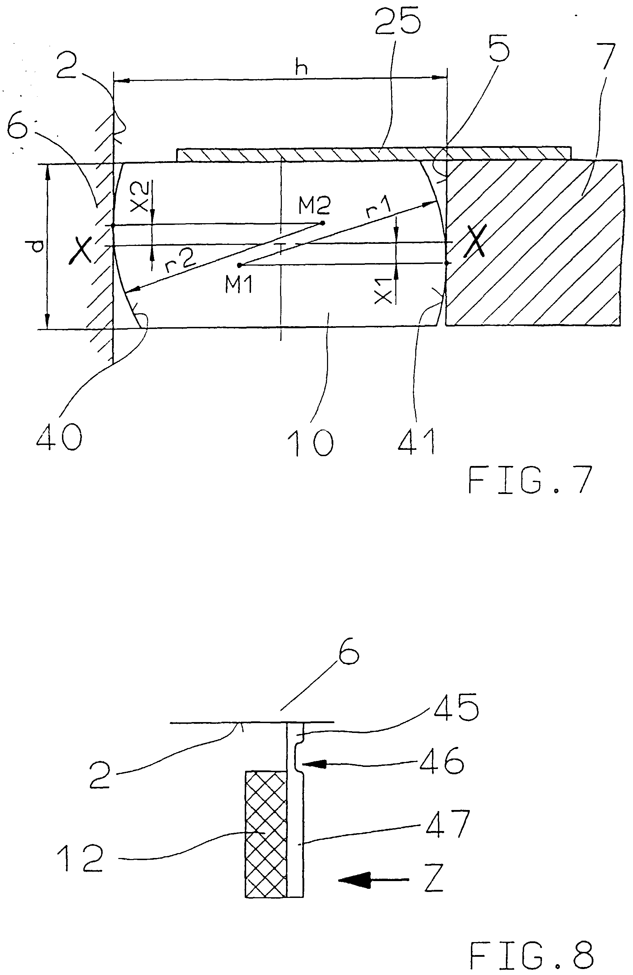

Fig. 7 zeigt vergrößert eine vorteilhafte Ausgestaltung des aus einem Rechteckstück mit balligen Flächen bestehenden Wälzkörpers (10). Die balligen Flächen (40, 41) sind als Oberflächensegmente von Zylindern geformt. Der Radius (r₁ bzw. r₂) der Zylinder ist größer als die halbe Höhe (h) des Wälzkörpers (10). Dadurch stellt sich bei gegebener Bremskraft eine geringe Flächenpressung zwischen dem Wälzkörper (10) und der Abstützung (2) des Bremsträgers (6) bzw. der Stirnfläche (5) des Bremsbelagträgers (7) ein.

Da die Radien (r₁ bzw. r₂) größer sind als die halbe Höhe (h) des Wälzkörpers (10), verschieben sich beim Kippen des Wälzkörpers (10) die Zylinderachsen (M₁ und M₂) in Zuspannrichtung (Z) bzw. in Gegenrichtung relativ zueinander. Die Verschiebung der Zylinderachsen (M₁ und M₂) hat zur Folge, daß die Abstützkräfte in den Abstützflächen des Wälzkörpers (10) ein Drehmoment auf den Wälzkörper (10) ausüben, welches durch Reibkräfte in den Berührungsflächen zwischen dem Wälzkörper (10) und der Abstützung (2) des Bremsträgers (6) sowie der Stirnfläche (5) des Bremsbelagträgers (7) kompensiert wird. Um diese Reibkräfte möglichst klein zu halten, ist der Wälzkörper derart gestaltet, daß die Zylinderachsen (M₁ und M₂) vor einer Bremsbetätigung zur Ebene (X - X) durch die halbe Dicke (d) jeweils durch ein Maß (X₁, X₂) verschoben sind. Die Maße (X₁ und X₂) sind so gewählt, daß bei etwa halben Zuspannweg die Zylinderachsen (M₁ und M₂) die genannte Ebene (X - X) erreichen und im weiteren Verlauf der Zuspannung diese überschreiten.

Die Figuren 8 bis 13 zeigen verschiedene Abwandlungen einer anderen Ausführungsform der Erfindung. In dieser Ausführungsform ist der Wälzkörper (3 bzw. 10) des bisher mit Fortbildungen beschriebenen Ausführungsbeispiels durch zwischen dem Bremsbelagträger und der Abstützung (2 bzw. 11) des Bremsträgers (6) angeordnete elastische Mittel ersetzt, welche die bei einer Bremsbetätigung zwischen der Abstützung (2) des Bremsträgers (6) und dem Bremsbelagträger auftretenden Abstützkräfte übertragen, aber gleichzeitig eine Bewegung in Zuspannrichtung (Z) und in Gegenrichtung durch elastische Verformung zulassen.

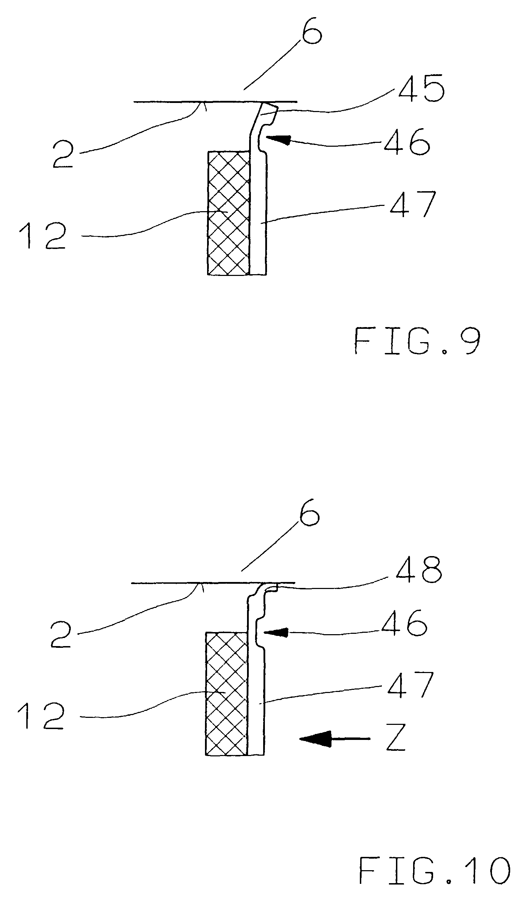

In den Figuren 8 und 9 sind die elastischen Mittel dadurch gebildet, daß in den Bremsbelagträger (45, 46, 47) eine Querschnittsverringerung (46) eingearbeitet ist, die bei Belastung des Bremsbelagträgers (45, 46, 47) in Zuspannrichtung und in Gegenrichtung bei gleichzeitigem Festhalten des der Abstützung (2) des Bremsträgers (6) zugewandten Endes (45) des Bremsbelagträgers (45, 46, 47) als federndes Scharnier wirkt und als solches im folgenden auch bezeichnet wird.

Fig. 8 zeigt diese Abwandlung bei gelöster Bremse. Das elastische Scharnier ist in diesem Zustand unverformt. Der Bremsbelagträger (45, 46, 47) ist in diesem Zustand vor dem Aufbau einer Bremskraft in Zuspannrichtung (Z) und in Gegenrichtung frei oder unter Gleiten des Endes (45) auf der Abstützung (2) des Bremsträgers (6) verschiebbar. Bei einer Bremsbetätigung tritt das Ende (45) des Bremsbelagträgers (45, 46, 47) mit der Abstützung (2) des Bremsträgers (6) reibend in Eingriff. In diesem Zustand erforderliche weitere Bewegungen in Zuspannrichtung (Z) und in Gegenrichtung, beispielsweise aus den weiter oben genannten Gründen, werden nur noch von dem Mittelteil (47) des Bremsbelagträgers (45, 46, 47) ausgeführt, während das Ende (45) des Bremsbelagträgers (45, 46, 47) auf der Abstützung (2) des Bremsträgers (6) ortsfest bleibt und das elastische Scharnier sich verformt. Fig. 9 zeigt den Bremsbelagträger (45, 46, 47) in diesem Zustand. Das Ende (45) ist im elastischen Scharnier (46) gegenüber dem Mittelteil (47) entgegen der Zuspannrichtung (Z) abgebogen.

Beim Lösen der Bremse bildet sich die Verformung des elastischen Scharniers zurück. Dadurch kehrt der Bremsbelagträger (45, 46, 47) in seinen in Fig. 8 dargestellten Zustand zurück. Dabei wird das Mittelteil (47) des Bremsbelagträgers (45, 46, 47) um das Maß der Verformung des Scharniers bei der Bremsbetätigung zurückgestellt, während ein vor dem Aufbau einer Bremskraft frei oder unter Gleiten des Endes (45) an der Abstützung (2) des Bremsträgers (6) zurückgelegter Weg erhalten bleibt. Auch bei dieser Abwandlung tritt deshalb die weiter oben im Zusammenhang mit Fig. 3 erwähnte Einstellwirkung bzw. Begrenzungswirkung des Zuspannweges und die Wirkung als Belagverschleiß-Ausgleichseinrichtung auf.

Zur Verringerung eines beim Gleiten des Endes (45) auf der Abstützung (2) des Bremsträgers (6) und beim Eingriff dieser Teile etwa auftretenden Verschleißes kann die der Abstützung (2) des Bremsträgers (6) zuweisende Fläche des Endes (45) des Bremsbelagträgers (45, 46, 47) ballig ausgebildet werden.

In Fig. 10 ist das der Abstützung (2) des Bremsträgers (6) zugewandte Ende (48) des Bremsbelagträgers (46, 47, 48) entgegen der Zuspannrichtung (Z) abgebogen. Diese Abwandlung hat den Vorteil, daß die zur Verformung des elastischen Scharniers erforderliche Kraft nicht von der Zuspanneinrichtung aufgebracht werden muß, sondern von der Stützkraft zwischen dem Bremsbelagträger (46, 47, 48) und der Abstützung (2) des Bremsträgers (6) aufgebracht wird.

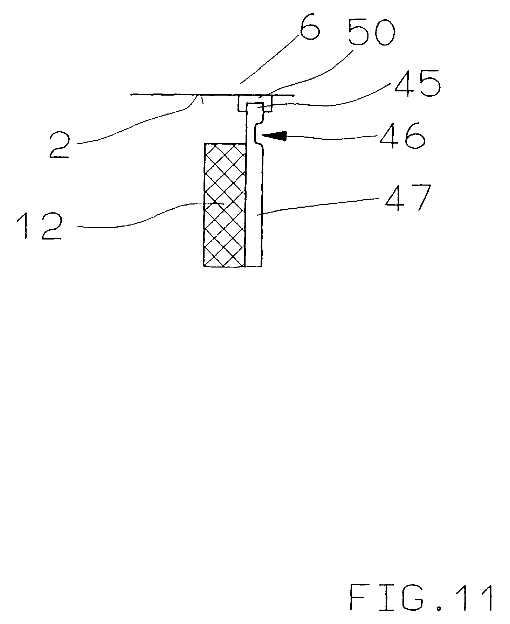

Fig. 11 deckt sich mit Fig. 8 mit dem Unterschied, daß zwischen dem Ende (45) des Bremsbelagträgers (45, 46, 47) und der Abstützung (2) des Bremsträgers (6) ein Schuh (50) angeordnet ist. Dieser dient der Herabsetzung der zwischen der Stirnfläche des Endes (45) des Bremsbelagträgers (45, 46, 47) und der Abstützung (2) des Bremsträgers (6) auftretenden Flächenpressung und damit der Verschleißminderung bzw. -verhinderung

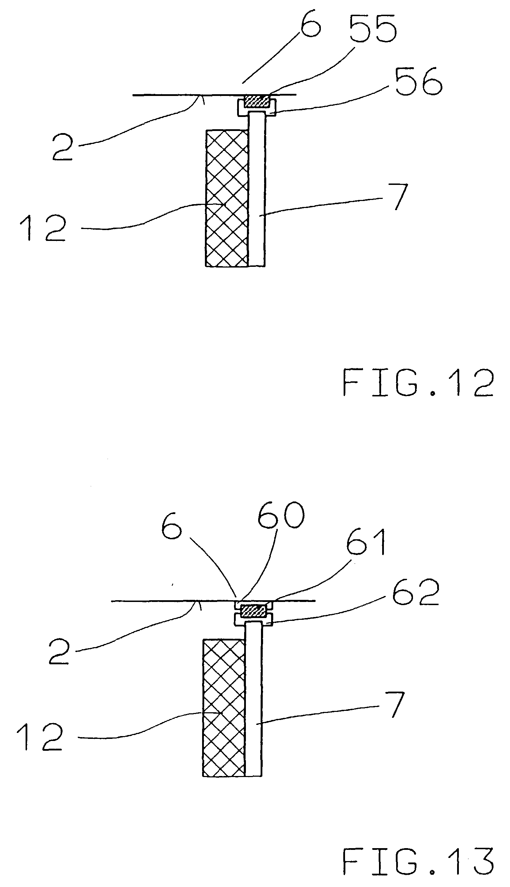

In den Abwandlungen nach den Fig. 12 und 13 werden als elastische Mittel Elastomerelemente (55 bzw. 61) eingesetzt.

In Fig. 12 ist zwischen dem Bremsbelagträger (7) und dem Elastomerelement (55) ein Zwischenstück (56) angeordnet. Dieses kann, für sich betrachtet, ein loses Teil sein, es kann aber auch nur mit dem Elastomerelement (55) verbunden oder nur mit dem Bremsbelagträger (7) verbunden oder sowohl mit dem Elastomerelement (55) als auch mit dem Bremsbelagträger (7) verbunden sein.

In Fig. 13 ist das Elastomerelement (61) zwischen zwei Zwischenteilen (60, 62) gefangen. Jedes Zwischenteil (60 und 62) sowie das Elastomerelement (61) können, für sich betrachtet, lose Teile sein. Es ist aber auch möglich, das Elastomerelement (61) mit einem der Zwischenteile (60, 62) oder mit beiden Zwischenteilen (60, 62) zu verbinden. Außerdem können das dem Bremsbelagträger (7) zugewandte Zwischenteil (62), aber auch das bzw. die mit diesem verbundenen Bauteile Elastomerelement (61) bzw. Zwischenglied (60) mit dem Bremsbelagträger (7) verbunden sein.

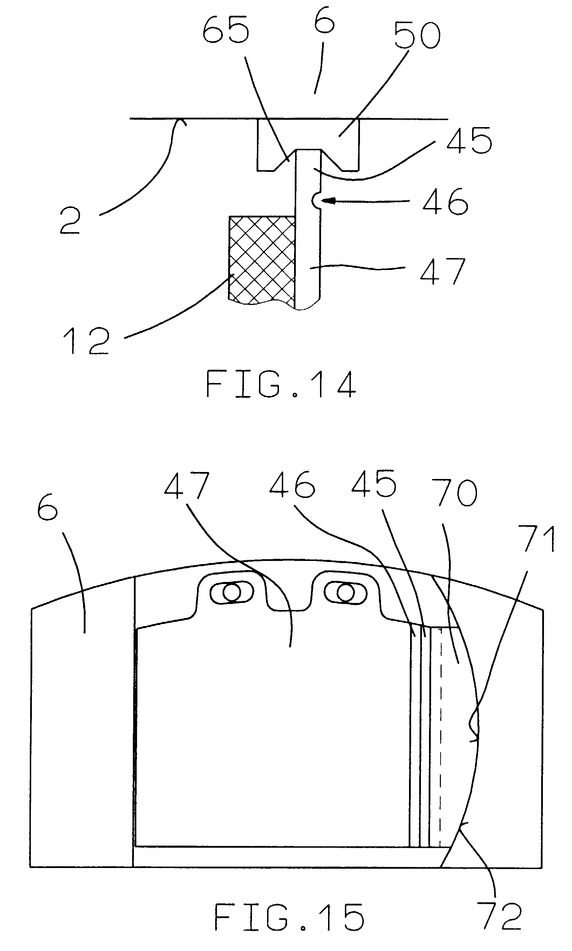

In der in Fig. 14 dargestellten Fortbildung der Abwandlung nach Fig. 11 weist der Schuh (50) eine Nut (65) für die Aufnahme des Endes (45) des Bremsbelagträgers (45, 46, 47) auf. Die Nut (65) erweitert sich in Richtung auf den Bremsbelagträger (45, 46, 47) zu. Bei zweckentsprechender Bemessung stellt die Erweiterung der Nut (65) die ungehinderte Verformbarkeit des elastischen Scharniers (46) des Bremsbelagträgers (45, 46, 47) sicher.

Fig. 15 stellt in einer Ansicht der Betätigungseinrichtung aus Sicht der Bremsscheibe (1) bei entferntem Bremsbelag eine andere mögliche Fortbildung der Abwandlung nach Fig. 11 dar. In dieser verlaufen, in Drehrichtung der Bremsscheibe gesehen, an einem Ende des Bremsbelagträgers (45, 46, 47) die Abstützung (71) und die der Abstützung (71) zugewandte Stirnfläche (72) des Schuhs (70) kreisförmig zueinander komplementär gewölbt, und zwar aus der Sicht des Bremsbelagträgers (45, 46, 47) konvex. Mit gleicher Wirkung kann die Wölbung aber auch in nicht dargestellter Weise aus der Sicht des Bremsbelagträgers (45, 46, 47) konkav verlaufen. "Aus der Sicht der Bremsscheibe" bedeutet für beide genannten Arten Wölbung mit anderen Worten, daß die den einzelnen Punkten der Stirnfläche (72) des Schuhs (70) und der Abstützung (71) des Bremsträgers (6) zugeordneten Krümmungsmittelpunkte auf Parallelen zu der Drehachse der Bremsscheibe (1) liegen. Diese Ausbildung vermeidet das Auftreten von Störungen infolge Paralellitätsabweichungen zwischen der Stirnfläche des Bremsbelagträgers (45, 46, 47) und der Abstützung des Bremsträgers (6). Dieser Vorteil tritt auf infolge selbsttätigen Verschiebens des Druckstücks (70) in seiner Längsrichtung beim Aufbau einer Bremskraft und damit einer Flächenpressung zwischen dem Bremsbelagträger (45, 46, 47), dem Druckstück (70) und der Abstützung (71). Zur Förderung der Wirkung der genannten gewölbten Ausbildung kann der Krümmungsradius der Stirnfläche (72) des Druckstücks (70) etwas kleiner oder etwas größer ausgebildet sein als der Krümmungsradius der Abstützung (71).

Statt, wie dargestellt, nur an einem Ende des Bremsbelagträgers (45, 46, 47), können die Abstützung und die ihr zugewandte Stirnfläche des Schuhs auch an beiden Enden kreisförmig zueinander komplementär verlaufen, so daß der erwähnte Vorteil dieser Ausbildung an beiden Enden auftritt.

Im übrigen gelten, soweit sich aus dem Vorstehenden nichts widersprechendes ergibt, die vorstehende für die ein Ausführungsbeispiel, eine Fortbildung und eine Abwandlung gemachten Ausführungen für die anderen Ausführungsbeispiele, Fortbildungen und Abwandlungen direkt oder in entsprechender Anwendung mit.

Der Fachmann erkennt, daß sich der Schutzbereich der Erfindung nicht in den beschriebenen Ausführungsbeispielen und in deren beschriebenen Fortbildungen erschöpft, sondern alle Ausgestaltungen umfaßt, deren Merkmale sich den Patentansprüchen unterordnen.

## Patentansprüche

1. Betätigungseinrichtung für eine Scheibenbremse mit mindestens einem mit Bremsbelag (12) belegten Bremsbelagträger (7), der axial in Richtung der Bremsscheibe (1) durch eine Zuspannung gegen die Bremsscheibe (1) bewegbar ist, und mindestens einer in Umfangsrichtung wirkenden Abstützung (2, 11) für den Bremsbelagträger (7), d. h. Anschlag am Bremsträger (6) zur Aufnahme der aus den Bremsmomenten resultierenden Kräfte,
wobei zwischen Bremsbelagträger (7) und Abstützung (2 bzw. 11) wenigstens ein Wälzkörper (3, 10) angeordnet ist,
dadurch gekennzeichnet,
daß Stellmittel (25) vorgesehen sind, die den Wälzkörper (3 bzw. 10) bei gelöster Bremse in einer vorgegeben Ausgangsposition relativ zum Bremsbelagträger (7) halten und bei Betätigung der Bremse eine Abwälzbewegung des Wälzkörpers (3, 10) zulassen.

2. Betätigungseinrichtung nach Anspruch 1,
dadurch gekennzeichnet,
daß der Walzkörper (3) die Form einer Rolle aufweist.

3. Betätigungseinrichtung nach Anspruch 1,
dadurch gekennzeichnet,
daß der Wälzkörper (10) aus einem Rechteckstück besteht, dessen sich am Bremsbelagträger (7) und an der Abstützung (11) abstützende Flächen ballig ausgebildet sind.

4. Betätigungseinrichtung nach Anspruch 3,
dadurch gekennzeichnet,
daß die Berührungslinie zwischen Bremsbelagträger (7) und Wälzkörper (10) ein aus Richtung des Wälzkörpers (10) konkaver Kreisbogen ist.

5. Betätigungseinrichtung nach Anspruch 3,
dadurch gekennzeichnet,
daß die balligen Flächen (40, 41) zylindrisch sind und
daß die Radien (r₁, r₂) der zugehörigen Zylinder gröer sind als die halbe Höhe (h) des Rechteckstückes (r > h/2).

6. Betätigungseinrichtung nach Anspruch 5,
dadurch gekennzeichnet,
daß die Achsen (M₁, M₂) der Zylinder zu der Ebene (X - X) durch die halbe Dicke (d) des Wälzkörpers (10) in entgegengesetzter Richtung verschoben sind.

7. Betätigungseinrichtung nach einem der vorhergehenden Ansprüche,
dadurch gekennzeichnet,
daß als Stellmittel (25) eine mit dem Bremsbelagträger (7) verbundene Feder (25), vorteilhafterweise Blattfeder, vorgesehen ist.

8. Betätigungseinrichtung nach einem der Ansprüche 1 bis 6,
dadurch gekennzeichnet,
daß als Stellmittel ein mit dem Bremsbelagträger einerseits und mit dem Walzkörper andererseits in Verbindung stehendes Elastomere vorgesehen ist.

9. Betätigungseinrichtung nach einem der Ansprüche 7 oder 8,
dadurch gekennzeichnet,
daß die Stellmittel (25) so angeordnet sind, daß sie eine Bewegung des Wälzkörper (3, 10) relativ zum Bremsbelagträger (7) sowohl in Zuspannrichtung (Z) als auch in Gegenrichtung zulassen.

10. Betätigungseinrichtung nach einem der vorhergehenden Ansprüche,
dadurch gekennzeichnet,
daß an dem Zwischenglied (3) und/oder an dem Bremsbelagträger (7) wenigstens ein die Beweglichkeit des Zwischengliedes (3) relativ zu dem Bremsbelagträger (7) in Zuspannrichtung (Z) begrenzender Anschlag (35, 36; 37, 38) angeordnet ist.

11. Betätigungseinrichtung nach Anspruch 10,
dadurch gekennzeichnet,
daß der Anschlag (37, 38) wenigstens in Zuspannrichtung (Z) elastisch ist.

12. Betätigungseinrichtung für eine Scheibenbremse mit mindestens einem mit Bremsbelag (12) belegten Bremsbelagträger (7), der axial in Richtung der Bremsscheibe (1) durch eine Zuspannung gegen die Bremsscheibe (1) bewegbar ist, und mindestens einer in Umfangsrichtung wirkenden Abstützung (2, 11) für den Bremsbelagträger (7), d. h. Anschlag am Bremsträger (6) zur Aufnahme der aus den Bremsmomenten resultierenden Kräfte, wobei
zwischen Bremsbelagträger (7) und Abstützung (2 bzw. 11) elastische Mittel angeordnet sind, die Abstützungskräfte übertragen, aber gleichzeitig eine Bewegung in Zuspannrichtung (Z) und in Gegenrichtung durch elastische Verformung zulassen,
dadurch gekennzeichnet,
daß die elastischen Mittel als eine in den Bremsbelagträger (45, 46, 47) eingearbeitete Querschnittsverringerung (46) ausgebildet sind, die bei Belastung des Bremsbelagträgers (45, 46, 47) in Zuspannrichtung (Z) und in Gegenrichtung bei gleichzeitigem Festhalten des der Abstützung (2) des Bremsträgers (6) zugewandten Endes (45) des Bremsbelagträgers (45, 46, 47) durch Reibschluß mit dieser Abstützung (2) als federndes Scharnier wirkt.

13. Betätitungseinrichtung nach Anspruch 12,
dadurch gekennzeichnet,
daß das der Abstützung (2) des Bremsträgers (6) zugewandte Ende (48) des Bremsbelagträgers (46, 47, 48) entgegen der Zuspannrichtung (Z) abgebogen ist.

14. Betätigungseinrichtung nach Anspruch 12,
dadurch gekennzeichnet,
daß zwischen dem der Abstützung (2) des Bremsträgers (6) zugewandten Ende (45) des Bremsbelagträgers (45, 46, 47) und der Abstützung (2) des Bremsträgers (6) ein Schuh (50) angeordnet ist.

15. Betätigungseinrichtung nach Anspruch 14,
dadurch gekennzeichnet,
daß die Abstützung (71) des Bremsträgers (6) und die der Abstützung (71) zugewandte Stirnfläche (72) des Schuhs (70) kreisförmig zueinander komplementär gewölbt verlaufen.

16. Betätigungseinrichtung nach einem der Ansprüche 14 oder 15,
dadurch gekennzeichnet,
daß der Schuh (50) eine Nut (65) für die Aufnahme des Endes (45) des Bremsbelagträgers (45, 46, 47) aufweist, die sich in Richtung auf den Bremsbelagträger (45, 46, 47) zu erweitert.

## Claims

1. Actuating device for a disc brake, having at least one brake lining carrier (7) covered with brake lining (12), which brake lining carrier is movable axially in the direction of the brake disc (1) by an application stroke towards the brake disc (1), and having at least one circumferentially acting supporting element (2, 11) for the brake lining carrier (7), that is, a stop member on the brake carrier (6) for absorbing the forces resulting from the braking moments,
wherein between brake lining carrier (7) and supporting element (2, 11) there is arranged at least one rolling-contact element (3, 10),
characterised in that
adjusting means (25) are provided, which, with the brake released, hold the rolling-contact element (3, 10) in a given starting position relative to the brake lining carrier (7) and on actuation of the brake allow a rolling movement of the rolling-contact element (3, 10).

2. Actuating device according to claim 1, characterised in that the rolling-contact element (3) is in the form of a roll.

3. Actuating device according to claim 1, characterised in that the rolling-contact element (10) consists of a rectangular part, of which the surfaces bearing on the brake lining carrier (7) and on the supporting element (11) are convex.

4. Actuating device according to claim 3, characterised in that the line of contact between brake lining carrier (7) and rolling-contact element (10) is a concave arc of a circle from the direction of the rolling-contact element (10).

5. Actuating device according to claim 3, characterised in that the convex surfaces (40, 41) are cylindrical and the radii (**r**₁, **r**₂) of the associated cylinders are larger than half the height (**h**) of the rectangular part (**r** > **h/2**).

6. Actuating device according to claim 5, characterised in that the axes (**M**₁, **M**₂) of the cylinders are displaced with respect to the plane (**X** - **X**) through the centre of the thickness (**d**) of the rolling-contact element (10) in the opposite direction.

7. Actuating device according to one of the preceding claims, characterised in that as adjusting means (25) a spring (25), advantageously a leaf spring, connected to the brake lining carrier (7) is provided.

8. Actuating device according to one of claims 1 to 6, characterised in that as adjusting means there is provided an elastomeric element in connection on one side with the brake lining carrier and on the other side with the rolling-contact element.

9. Actuating device according to one of claims 7 or 8, characterised in that the adjusting means (25) are arranged so that they permit a movement of the rolling-contact element (3, 10) relative to the brake lining carrier (7) both in the application direction (Z) and in the opposite direction.

10. Actuating device according to one of the preceding claims, characterised in that on the intermediate element (3) and/or on the brake lining carrier (7) there is arranged at least one stop (35, 36; 37, 38) limiting the mobility of the intermediate element (3) relative to the brake lining carrier (7) in the application direction (Z).

11. Actuating device according to claim 10, characterised in that the stop (37, 38) is resilient at least in the application direction (Z).

12. Actuating device for a disc brake having at least one brake lining carrier (7) covered with brake lining (12), which brake lining carrier is movable axially in the direction of the brake disc (1) by an application stroke towards the brake disc (1), and having at least one circumferentially acting supporting element (2, 11) for the brake lining carrier (7), that is, a stop member on the brake carrier (6) for absorbing the forces resulting from the braking moments,
wherein
between the brake lining carrier (7) and supporting element (2, 11) there are arranged resilient means which transfer the supporting forces yet at the same time allow a movement in the application direction (Z) and in the opposite direction by resilient deformation,
characterised in that the resilient means are in the form of a cross-sectional reduction (46) incorporated into the brake lining carrier (45, 46, 47), which cross-sectional reduction acts as a resilient hinge on loading of the brake lining carrier (45, 46, 47) in the application direction (Z) and in the opposite direction with the end (45) of the brake lining carrier (45, 46, 47) facing the supporting element (2) of the brake carrier (6) simultaneously being fixedly held by virtue of frictional engagement with that supporting element (2).

13. Actuating device according to claim 12, characterised in that the end (48) of the brake lining carrier (46, 47, 48) facing the supporting element (2) of the brake carrier (6) is bent away in the opposite direction to the application direction (Z).

14. Actuating device according to claim 12, characterised in that a shoe (50) is arranged between the end (45) of the brake lining carrier (45, 46, 47) facing the supporting element (2) of the brake carrier (6) and the supporting element (2) of the brake carrier (6).

15. Actuating device according to claim 14, characterised in that the supporting element (71) of the brake carrier (6) and the end face (72) of the shoe (70) facing the supporting element (71) run circularly in complementary curves.

16. Actuating device according to one of claims 14 or 15, characterised in that the shoe (50) has a channel (65) for receiving the end (45) of the brake lining carrier (45, 46, 47), which channel widens towards the brake lining carrier (45, 46, 47).

## Revendications

1. Dispositif d'actionnement pour un frein à disque, comportant au moins un support de garniture de frein (7) muni d'une garniture de frein (12) et mobile axialement en direction du disque de frein (1) par serrage contre le disque de fi-ein (1), et au moins une pièce d'appui (2, 11) agissant en direction périphérique pour le support de garniture de frein (7), c'est-à-dire une butée sur le support de frein (1) pour encaisser les forces résultant des couples de freinage, dans lequel au moins un corps de roulement (3, 10) est agencé entre le support de garniture de frein (7) et la pièce d'appui (2 ou 11), caractérisé en ce qu'il est prévu des organes de positionnement (25) qui retiennent le corps de roulement (3 ou 10) dans une position de départ prédéterminée par rapport au support de garniture de frein (7) lorsque le frein est relâché, et qui permettent un mouvement de roulement du corps de roulement (3, 10) lorsque le frein est actionné.

2. Dispositif d'actionnement selon la revendication 1, caractérisé en ce que le corps de roulement (3) présente la forme d'un galet.

3. Dispositif d'actionnement selon la revendication 1, caractérisé en ce que le corps de roulement (10) est constitué par un élément rectangulaire dont les surfaces qui s'appuient contre le support de garniture de frein (7) et contre la pièce d'appui (11) sont réalisées de façon bombée.

4. Dispositif d'actionnement selon la revendication 3, caractérisé en ce que la ligne de contact entre le support de garniture de frein (7) et le corps de roulement (10) est un arc de cercle concave depuis la direction du corps de roulement (10).

5. Dispositif d'actionnement selon la revendication 3, caractérisé en ce que les surfaces bombées (40, 41) sont cylindriques et en ce que les rayons (r₁, r₂) des cylindres associés sont plus grands que la moitié de la hauteur (h) de l'élément rectangulaire (r > h/2).

6. Dispositif d'actionnement selon la revendication 5, caractérisé en ce que les axes (M₁, M₂) des cylindres sont déplacés en direction opposé vers le plan (X - X) sur la moitié de l'épaisseur (d) du corps de roulement (10).

7. Dispositif d'actionnement selon l'une quelconque des revendications précédentes, caractérisé en ce qu'il est prévu en tant qu'organes de positionnement (25) un ressort (25) relié au support de garniture de frein (7), de préférence un ressort à lame.

8. Dispositif d'actionnement selon l'une quelconque des revendications 1 à 6, caractérisé en ce qu'il est prévu en tant qu'organe de positionnement un élastomère en liaison avec le support de garniture de frein d'une part, et avec le corps de roulement d'autre part.

9. Dispositif d'actionnement selon l'une ou l'autre des revendications 7 et 8, caractérisé en ce que les organes de positionnement (25) sont agencés de telle sorte qu'il permettent un mouvement du corps de roulement (3, 10) par rapport au support de garniture de frein (7) tant en direction de serrage (Z) qu'en direction opposée.

10. Dispositif d'actionnement selon l'une quelconque des revendications précédentes, caractérisé en ce qu'il est prévu sur l'élément intermédiaire (3) et/ou sur le support de garniture de frein (7) au moins une butée (35, 36 ; 37, 38) qui limite la mobilité de l'élément intermédiaire (3) par rapport au support de garniture de frein (7) en direction de serrage (Z).

11. Dispositif d'actionnement selon la revendication 10, caractérisé en ce que la butée (37, 38) est élastique au moins en direction de serrage (Z).

12. Dispositif d'actionnement pour un frein à disque, comportant au moins un support de garniture de frein (7) muni d'une garniture de frein (12) et mobile axialement en direction du disque de frein (1) par un serrage contre le disque de frein (1), et au moins une pièce d'appui (2, 11) agissant en direction périphérique pour le support de garniture de frein (7), c'est-à-dire une butée sur le support de frein (1) pour encaisser les forces résultant des couples de freinage, dans lequel sont prévus des organes élastiques agencés entre le support de garniture de frein (7) et la pièce d'appui (2 ou 11), qui transmettent des forces d'appui mais qui permettent simultanément un mouvement en direction de serrage (Z) et en direction opposée par déformation élastique, caractérisé en ce que les organes élastiques sont réalisés sous forme d'un rétrécissement de section transversale (46) ménagé dans le support de garniture de frein (45, 46, 47), qui agit comme une charnière élastique lors d'une charge du support de garniture de frein (45, 46, 47) en direction de serrage (Z) et en direction opposée, en retenant simultanément l'extrémité (45) du support de garniture de frein (45, 46, 47), qui est orientée vers la pièce d'appui (2) du support de frein (6), par une coopération de friction avec cette pièce d'appui (2).

13. Dispositif d'actionnement selon la revendication 12, caractérisé en ce que l'extrémité (48) du support de garniture de frein (46, 47, 48), qui est orientée vers la pièce d'appui (2) du support de frein (6) est repliée en sens opposé à la direction de serrage (Z).

14. Dispositif d'actionnement selon la revendication 12, caractérisé en ce qu'il est prévu un sabot (50) entre l'extrémité (45) du support de garniture de frein (45, 46, 47), qui est orientée vers la pièce d'appui (2) du support de frein (6) et la pièce d'appui (2) du support de frein (6).

15. Dispositif d'actionnement selon la revendication 14, caractérisé en ce que la pièce d'appui (71) du support de frein (6) et la surface frontale (72) du sabot (70), qui est orientée vers la pièce d'appui (71) s'étendent de façon bombée, complémentaires l'une à l'autre et en forme de cercle.

16. Dispositif d'actionnement selon l'une ou l'autre des revendications 14 et 15, caractérisé en ce que le sabot (50) présente une gorge (65) pour recevoir l'extrémité (45) du support de garniture de frein (45, 46, 47), qui va en s'élargissant en direction du support de garniture de frein (45, 46, 47).
